Europäisches Patentamt

European Patent Office

Office européen des brevets

(19)

(11)  **EP 1 120 636 B1**

(12)  **EUROPÄISCHE PATENTSCHRIFT**

(45) Veröffentlichungstag und Bekanntmachung des Hinweises auf die Patenterteilung:
**03.09.2003   Patentblatt 2003/36**

(51) Int Cl.[7]: **G01J 1/00**, G01J 1/42

(21) Anmeldenummer: **01100702.8**

(22) Anmeldetag: **12.01.2001**

(54) **Verfahren zum Bestimmen von bodennaher UV-Strahlung**

Method for determining UV radiation close to the ground

Procédé pour déterminer le rayonnement UV à proximité du sol

(84) Benannte Vertragsstaaten:
**AT BE CH CY DE DK ES FI FR GB GR IE IT LI LU MC NL PT SE TR**

(30) Priorität: **24.01.2000   DE 10003000**

(43) Veröffentlichungstag der Anmeldung:
**01.08.2001   Patentblatt 2001/31**

(73) Patentinhaber: **Deutsches Zentrum für Luft- und Raumfahrt e.V.**
**53175 Bonn (DE)**

(72) Erfinder: **Meerkötter, Ralf, Dr.**
**81545 München (DE)**

(74) Vertreter: **von Kirschbaum, Albrecht, Dipl.-Ing. Patentanwalt,**
**Postfach 15 20**
**82102 Germering (DE)**

(56) Entgegenhaltungen:
• **HOOGEN ET AL.: "Ozone profiles from Gome satellite data : algorithm description and first validation" JOURNAL OF GEOPHYSICAL RESEARCH, Bd. 104, Nr. D7, Juli 1999 (1999-07), Seite 8263 seq. XP002203056 Washington, USA**

**Beschreibung**

Die Erfindung betrifft ein Verfahren zum Bestimmen von bodennaher UV-Strahlung unter Verwendung von Strahlungstransportsimulationen.

Die Abnahme des stratosphärischen Ozons und die dadurch bedingte Zunahme der bodennahen UV-Strahlung wirkt sich direkt und indirekt negativ auf den Menschen aus. Zu den direkten Schädigungen gehören beispielsweise der Hautkrebs, die Schwächung des Immunsystems sowie Augenkrankheiten. Indirekt betroffen ist der Mensch durch Schäden in der Landwirtschaft oder durch Schädigungen der Ökosysteme im Meer, da durch letzteres der Fischfang beeinträchtigt wird. Darüber hinaus können auch verschiedene Materialien durch intensive UV-Strahlung zerstört werden.

Da aus diesen Gründen die Öffentlichkeit sensibilisiert ist, sind nicht nur die Medien, sondern beispielsweise auch die Krankenkassen, die Hersteller von Sonnenschutzprodukten oder die Tourismus-Industrie an täglichen Analysen bzw. Prognosen der UV-Strahlung interessiert.

Bekannte Verfahren zur Bestimmung und Kartierung der UV-Strahlung lassen sich in drei Kategorien einteilen, nämlich Strahlungstransportsimulationen, semi-empirische Verfahren und Verfahren, die sich auf sogenannte 'look-up-tables' stützen.

Strahlungstransportsimulationen, das sind Computermodelle zur numerischen Integration der Strahlungsübertragungsgleichung, werden zur Berechnung der bodennahen UV-Strahlung verwendet. Alle relevanten UV Einflußparameter sind Eingabeparameter für die Strahlungstransportsimulationen.

Nachteilig bei Strahlungstransportsimulationen ist, daß deren Einsatz zur Bestimmung der bodennahen UV-Strahlung lange Rechenzeiten erfordert, so daß eine operationelle Anwendung, insbesondere die flächendeckende Kartierung, nicht möglich ist. Dies ist z.B. der Fall, wenn die UV-Einflußgrößen aus Satellitendaten in räumlich hoher Auflösung vorliegen und somit große Datenmengen schnell verarbeitet werden müssen. (D. Lubin et al. "Global surface ultraviolet radiation climatology from TOMS and ERBE data", JOURNAL OF GEOPHYSICAL RESEARCH, Bd. 103, No. D20, S.26061 bis 26091, 27. Oktober 1998.)

Die semi-empirischen Verfahren werden ebenfalls zur Bestimmung der UV-Strahlung verwendet. Hierbei handelt es sich um die Kombination von Strahlungstransportsimulationenn mit empirischen Formeln. Nachteilig bei dieser Kombination ist, daß der Einsatz der numerischen Modelle ebenfalls zu langen Rechenzeiten führt. Ferner sind semi-empirische Verfahren zum Teil auf bestimmte Gebiete beschränkt oder erfordern Messungen der Einflußgrößen mit bestimmten Instrumenten. (I. Foyo-Moreno et al. "A Simple All Weather Model to Estimate Ultraviolet Solar Radiation (290-385 nm), JOURNAL OF APPLIED METEOROLOGY, Bd. 38, S.1020 bis 1026, 03.08./09.10.1998 bzw. Oktober 1999)

Darüber hinaus werden auch Verfahren eingesetzt, die sich auf die Ergebnisse von Strahlungstransportrechnungen, sogenannte 'look-up-tables', stützen. Die bodennahe UV-Strahlung wird dann durch Anwendung von Interpolationsverfahren bestimmt, welche die aktuelle Konfiguration der UV relevanten Einflußparameter berücksichtigen.

Die Verwendung der look-up-tables erfordert in der Anwendung keine Strahlungstransportrechnungen, jedoch sind weitere Verfahrensschritte, wie Abfragen und Interpolationen, notwendig, um die UV-Strahlung entsprechend der aktuellen Konfiguration der Einflußgrößen zu bestimmen. Derartige Verfahren sind für den operationellen Einsatz nur sehr bedingt geeignet.

Somit ist festzuhalten, daß alle dem Anmelder bekannten Verfahren zur Bestimmung der UV-Strahlung zu aufwendig sind, um aus großen Datenmengen der UV-relevanten Einflußgrößen die bodennahe UV-Strahlung flächendeckend und schnell zur Verfügung zu stellen. Ferner arbeiten die bekannten Verfahren relativ langsam, so daß sie für operationelle und Flexibilität erfordernde Anwendungen nicht oder nur sehr eingeschränkt einsetzbar sind.

Der Erfindung liegt die Aufgabe zugrunde, Verfahren zu schaffen, mit welchen gleichzeitig der Einfluß von Ozon, Sonnenstand, Geländehöhe und optischer Dicke der Wolken auf die UV-Strahlung ermittelt werden kann, um beispielsweise für tägliche Analysen und Vorhersagen eine flächendeckende Information der bodennahen UV-Strahlung in möglichst kurzer Zeit bereitzustellen.

Gemäß der Erfindung ist dies bei einem Verfahren zum Bestimmen von bodennaher UV-Strahlung unter Verwendung von Strahlungstransportsimulationen durch die Verfahrensschritte des Anspruchs 1 erreicht.

Da gemäß der Erfindung gleichzeitig der Einfluß von Ozongehalt, Geländehöhe, Sonnenstand und optischer Dicke der Wolken auf bodennahe UV-Strahlung ermittelt wird, arbeitet das erfindungsgemäße Verfahren so effektiv, daß bodennahe UV-Strahlung in nahezu Echtzeit aus den vorstehend angegebenen UV-relevanten Einflußgrößen ermittelt werden kann. Bei dem erfindungsgemäßen Verfahren ist hierbei nicht vorgeschrieben, woher die Einflußgrößen stammen. Sie können beispielsweise aus Satellitenmessungen, Bodenmessungen oder als Ergebnis prognostischer Modelle vorliegen.

Das erfindungsgemäße Verfahren bietet somit eine breite Anwendungsmöglichkeit, da es sich sowohl für die Analyse von Veränderungen der UV-Strahlung mit historischen Daten als auch für die kurz- und langfristige UV-Prognose eignet. Ferner können mit Hilfe des erfindungsgemäßen Verfahrens verschiedene UV-Produkte, insbesondere Karten der in den Medien und anderen Industriezweigen verwendeten Größen, der UV-Index und die Sonnenbrandzeit erstellt werden.

Somit ist durch die Erfindung aufgrund einer optimalen Anpassung des Zusammenhanges zwischen der UV-Strahlungsgröße und den gleichzeitig wirkenden UV-relevanten Einflußgrößen, wie Ozongehalt, Geländehöhe, Bodenalbedo, solarem Zenitwinkel sowie optischer Dichte der Wolken, ein schnelles, d.h. operationell einsetzbares Verfahren zur Bestimmung der bodennahen UV-Strahlung unter Berücksichtigung aller für die UV-Strahlung wesentlichen Einflußgrößen geschaffen.

Die Vorteile dieses Verfahrens sind folgende:

• Zur Ermittlung der UV-Strahlung in Abhängigkeit von Ozongesamtsäule, solarem Zenitwinkel, Geländehöhe und optischer Dicke der Wolken ist im Vergleich zu den eingangs kurz angeführten bekannten Verfahren gemäß der Erfindung ein beinahe in Echtzeit durchzuführendes Verfahren geschaffen, welches sehr schnelle Anwendungen für den operationellen Betrieb ermöglicht. Selbst die weniger aufwendigen, bekannten Verfahren, die auf 'look-up-tables' zugreifen, benötigen weitere zusätzliche Verfahrensschritte, wie beispielsweise im allgemeinen zeitaufwendigere Interpolationen.

• Das erfindungsgemäße Verfahren eignet sich prinzipiell auch zur Bestimmung verschiedener UV-Strahlungsgrößen, wenn vorher ein entsprechender Datensatz für diese Strahlungsgröße mit Hilfe von Strahlungstransportrechnungen erstellt wird. Verschiedene Strahlungsgrößen sind beispielsweise die Strahlungsflußdichte im UV-A Spektralbereich von 320 bis 400nm oder die Strahlungsflußdichte im UV-B Spektralbereich von 290 bis 320nm. Beispiele weiterer UV-Strahlungsgrößen sind die für Hautrötung wirksame(erythem-wirksame) UV-Strahlungsflußdichte im gesamten UV-Spektralbereich von 290 bis 400nm, aus der sich auch UV-Index und Sonnenbrandzeit ableiten lassen, oder die für DNA-Schädigung oder für Hautkrebs wirksamen UV-Strahlungsdichten.

• Ferner können mit dem erfindungsgemäßen Verfahren auch die in der Öffentlichkeit bekannten und in den Medien und anderen Industriezweigen verwendeten Größen UV-Index und Sonnenbrandzeit ermittelt werden.

• Zur Durchführung des erfindungsgemäßen Verfahrens wird auch nicht vorgeschrieben, mit welchem Meßinstrument oder Prognosemodell die benötigten UV-relevanten Einflußgrößen bereitzustellen sind. Damit erschließt das erfindungsgemäße Verfahren ein breites Anwendungspotential von der Rekonstruktion der UV-Bedingungen mit historischen Daten über die tägliche Analyse und Prognose bis hin zur langfristigen Prognose über beispielsweise 10 Jahre und mehr.

• Insbesondere kann das erfindungsgemäße Verfahren zur Kartierung der UV-Strahlung für große Gebiete, wie beispielsweise für Gesamteuropa oder für globale Kartierungen eingesetzt werden, da das Verfahren eine schnelle Verarbeitung großer Datenmengen ermöglicht, die dann entstehen, wenn die UV-Einflußgrößen in räumlich hoher Auflösung vorliegen.

Weiterhin kann mittels des erfindungsgemäßen Verfahrens die aktuelle Intensität der UV-Strahlung oder daraus ableitbarer Größen, wie UV-Index, Sonnenbrandzeit oder auch zeitlich integrierte UV-Dosiswerte an bestimmten, fixierten Orten oder an dem (den) Aufenthaltsort(en) einer einzelnen Person bzw. einzelner Personen ermittelt werden, wenn für diesen Ort bzw. diese Orte die wichtigsten aktuellen UV-relevanten Einflußgrößen vorliegen. Auch können in Einrichtungen, wie beispielsweise Empfangsgeräten mit integrierten Prozessoren die erfindungsgemäßen Verfahren realisiert werden. Dies schließt dann auch die Nutzung mobiler Empfangsgeräte oder moderner Übertragungs- und Navigationstechnologien, wie beispielsweise GPS (Global Positioning System) ein.

Nachstehend wird die Erfindung anhand der Zeichnungen näher erläutert. Es zeigen:

Fig.1 anhand eines Blockdiagramms in Form eines Entwicklungsschemas Teilschritte zur Entwicklung des erfindungsgemäßen Verfahrens und

Fig.2 ein Anwendungsschema des erfindungsgemäßen Verfahrens.

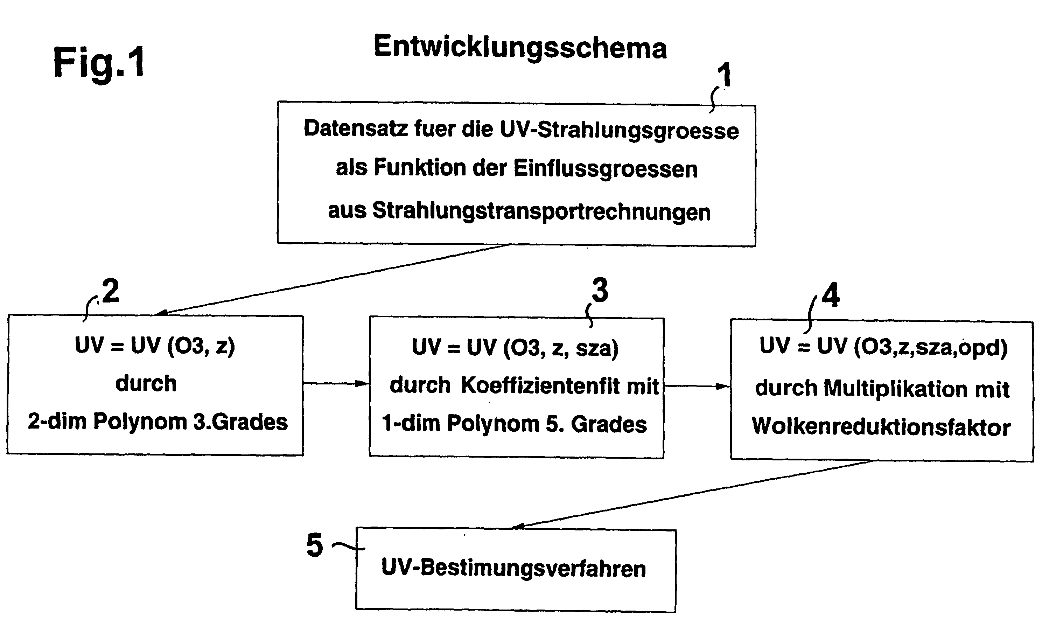

Wie dem in Fig.1 dargestellten Entwicklungsschema zu entnehmen ist, wird zuerst ein Datensatz für eine zu bestimmende Strahlungsgröße als Funktion der Einflußgrößen aus Strahlungstransportrechnungen mit Hilfe von Strahlungstransportsimulationen erstellt (Block 1). Hierbei ist der Datensatz so ausgelegt, daß er für eine große Variationsbreite der UV-relevanten Einflußgrößen eine zu bestimmende UV-Strahlungsgröße beeinhaltet.

Da die zu berechnende UV-Strahlungsgröße vom Ozongehalt der Atmosphäre und von der Geländehöhe abhängt, wird diese Abhängigkeit durch ein zweidimensionales Polynom 3. Grades gemäß der nachstehenden Gl.(1)

angepaßt (Block 2).

$$UV(O3, z) =$$

$$cf1 + cf2 * z + cf3 * z^2 + cf4 * z^3$$

$$+ cf5 * O3 + cf6 * O3 * z + cf7 * O3 * z^2 + cf8 * O3 * z^3$$

$$+ cf9 * O3^2 + cf10 * O3^2 * z + cf11 * O3^2 * z^2 + cf12 * O3^2 * z^3$$

$$+ cf13 * O3^3 + cf14 * O3^3 * z + cf15 * O3^3 * z^2 + cf16 * O3^3 * z^3 \tag{1}$$

Hierbei ist in der Gl.(1) mit 03 die Ozongesamtsäule in DU (Dopson Unit) und mit z die Geländehöhe in m bezeichnet. Darüber hinaus sind mit cfn mit n= 1 bis 16 Polynom-Koeffizienten bezeichnet (siehe Block 2).

Da die in den Polynom-Koeffizienten cfn enthaltene Abhängigkeit der mittels der Gl.(1) berechneten UV-Strahlungsgröße vom solaren Zenitwinkel sza abhängt, wird diese Abhängigkeit mit Hilfe eines eindimensionalen Polynoms 5. Grades (Block 3) gemäß der nachstehenden Gl.(2) (Block 3) angepaßt:

$$cfn(sza) = cf0' + cf1' * sza^1 + cf2' * sza^2 + cf3' * sza^3 + cf4' * sza^4 + cf5' * sza^5 \tag{2}$$

Da die UV-Strahlungsgröße auch noch von der optischen Dicke der Wolken opd abhängt, wird diese Abhängigkeit durch Multiplikation mit einem Reduktionsfaktor RF berücksichtigt. Dieser Reduktionsfaktor RF ist gewählt als das Verhältnis der UV-Strahlungsgröße bei bewölktem Himmel zu der UV-Strahlungsgröße der wolkenlosen Atmosphäre bei einer sonst gleichen Konfiguration der UV-Einflußgrößen 03, z, und sza. Der Reduktionsfaktor RF selbst ist hierbei von der optischen Dicke der Wolke bzw. Wolken abhängig (siehe Block 4); diese Abhängigkeit wird durch die nachstehend in Gl. (3) wiedergegebene Funktion angepaßt:

$$RF(opd) = y0 * exp(y1 * opd) + y2 \tag{3}$$

Die Abhängigkeit der Strahlungsgröße UV von der Ozongesamtsäule 03, der Geländehöhe z, dem Zenitwinkel sza und der optischen Dicke der Wolke bzw. von Wolken opd läßt sich durch die Kombination der vorstehend wiedergegebenen Gl'en (1) bis (3) erfassen. Die in den Blöcken 2 und 3 schematisch wiedergegebenen Entwicklungsschritte sind so gewählt, daß dadurch eine optimale Anpassung des Zusammenhangs zwischen der Strahlungsgröße UV und den gleichzeitig wirkenden Einflüssen der Ozon-Gesamtsäule 03, der Geländehöhe z und des solaren Zenitwinkels sza erfolgt. Durch Einsetzen von Gl. (2) in Gl.(1) und durch eine Multiplikation mit Gl.(3) ergibt sich dann die in der nachstehend wiedergegebenen Gl.(4) entsprechend angepaßte Abhängigkeit der Strahlungsgröße UV von 03, z, sza und opd:

$$UV(O3, z, sza, opd) =$$

$$(y0 * exp(y1 * opd) + y2) *$$

$$((a0 + a1 * sza^1 + a2 * sza^2 + a3 * sza^3 + a4 * sza^4 + a5 * sza^5)$$

$$+ (b0 + b1 * sza^1 + b2 * sza^2 + b3 * sza^3 + b4 * sza^4 + b5 * sza^5) * z$$

$$+ (c0 + c1 * sza^1 + c2 * sza^2 + c3 * sza^3 + c4 * sza^4 + c5 * sza^5) * z^2$$

$$+ (d0 + d1 * sza^1 + d2 * sza^2 + d3 * sza^3 + d4 * sza^4 + d5 * sza^5) * z^3$$

$$+ (e0 + e1 * sza^1 + e2 * sza^2 + e3 * sza^3 + e4 * sza^4 + e5 * sza^5) * O3$$

$$+ (f0 + f1 * sza^1 + f2 * sza^2 + f3 * sza^3 + f4 * sza^4 + f5 * sza^5) * O3 * z$$

$$+ (g0 + g1 * sza^1 + g2 * sza^2 + g3 * sza^3 + g4 * sza^4 + g5 * sza^5) * O3 * z^2$$

$$+ (h0 + h1 * sza^1 + h2 * sza^2 + h3 * sza^3 + h4 * sza^4 + h5 * sza^5) * O3 * z^3$$

$$+ (i0 + i1 * sza^1 + i2 * sza^2 + i3 * sza^3 + i4 * sza^4 + i5 * sza^5) * O3^2$$

$$+ (j0 + j1 * sza^1 + j2 * sza^2 + j3 * sza^3 + j4 * sza^4 + j5 * sza^5) * O3^2 * z$$

$$+ (k0 + k1 * sza^1 + k2 * sza^2 + k3 * sza^3 + k4 * sza^4 + k5 * sza^5) * O3^2 * z^2$$

$$+ (l0 + l1 * sza^1 + l2 * sza^2 + l3 * sza^3 + l4 * sza^4 + l5 * sza^5) * O3^2 * z^3$$

$$+ (m0 + m1 * sza^1 + m2 * sza^2 + m3 * sza^3 + m4 * sza^4 + m5 * sza^5) * O3^3$$

$$+ (n0 + n1 * sza^1 + n2 * sza^2 + n3 * sza^3 + n4 * sza^4 + n5 * sza^5) * O3^3 * z$$

$$+ (p0 + p1 * sza^1 + p2 * sza^2 + p3 * sza^3 + p4 * sza^4 + p5 * sza^5) * O3^3 * z^2$$

$$+ (q0 + q1 * sza^1 + q2 * sza^2 + q3 * sza^3 + q4 * sza^4 + q5 * sza^5) * O3^3 * z^3) \qquad (4)$$

Mit dem in Gl.(4) zusammengefaßten Verfahren zur Bestimmung der Strahlungsgröße UV lassen sich, wie eingangs bereits erwähnt, beinahe in Echtzeit bodennahe UV-Strahlungsgrößen ermitteln (Block 4). Hierbei sind die Koeffizienten in Gl.(4) als Funktion der Bodenalbedo und der optischen Dicke eines Aerosols angegeben, wie nachstehend anhand von speziellen Ausführungsbeispielen im einzelnen erläutert wird.

Der gleichzeitige Einfluß von Ozongehalt, Geländehöhe, Sonnenstand und optischer Dicke der Wolken auf bodennahe UV-Strahlung wird somit gemäß der Erfindung durch einen einzigen Verfahrensschritt, nämlich durch Berechnen der Strahlungsgröße UV gemäß Gl.(4) ermittelt.

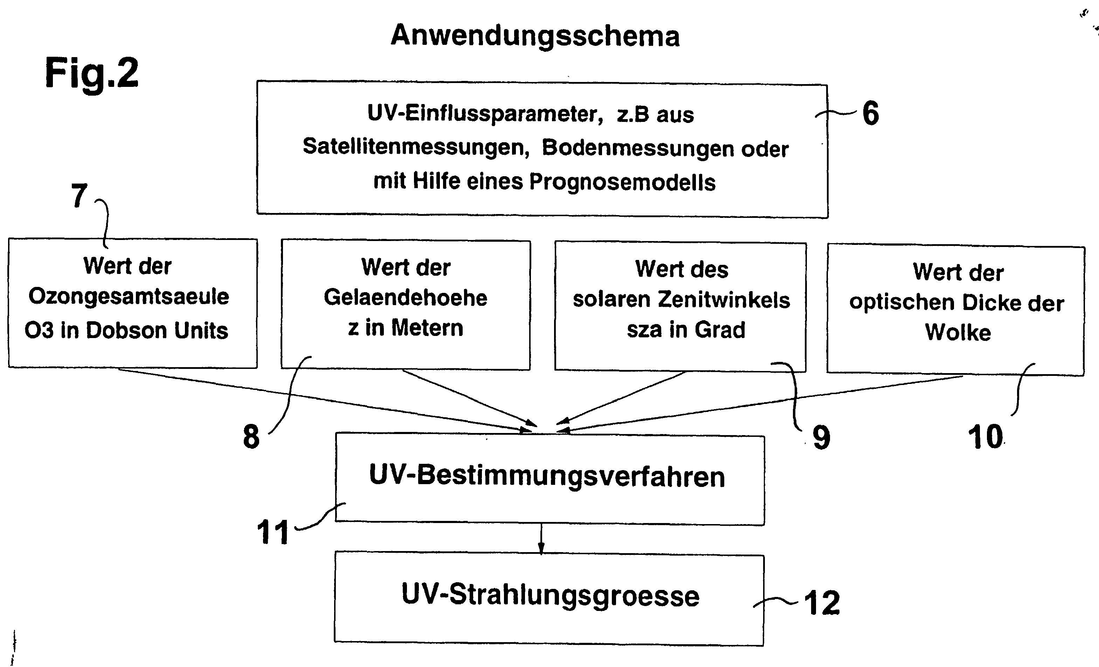

Bei dem als Blockdiagramm in Fig.2 wiedergegebenen Anwendungsschema können, wie eingangs bereits erwähnt, die die Strahlungsgröße UV beeinflussenden Größen bzw. Parameter beispielsweise aus Satellitenmessungen, Bodenmessungen oder mit Hilfe eines Prognosemodells ermittelt werden (siehe Block 6).

Ferner werden der Wert der Ozongesamtsäule 03 in DU-(Dobson Unit) (Block 7), der Wert der Geländehöhe z in m (Block 8), der Wert des solaren Zenitwinkels sza in Grad (°)(Block 9) und der Wert der optischen Dicke der Wolke bzw. Wolken opd (siehe Block 10) zum Bestimmen von bodennaher UV-Strahlung gemäß den Verfahrensschritten $b_1$ bis $b_3$ in das UV-Bestimmungsverfahren (Block 11) eingebracht.Daraus wird gemäß Gl. (4) letztendlich die UV-Strahlungsgröße in Abhängigkeit von den Werten gemäß den Blöcken 7 bis 10 bestimmt (Block 12).

Im folgenden werden drei Ausführungsbeispiele des erfindungsgemäßen Verfahrens zur Bestimmung der bodennahen erythemwirksamen UV-Strahlungsflußdichte beschrieben, nämlich ein Verfahren für schneefreien Boden, ein Verfahren für schneebedeckten Boden und ein Verfahren für teilweise schneebedeckten Boden, da große Unterschiede der UV-Bodenalbedo im wesentlichen zwischen schneebedecktem, teilweise schneebedecktem und schneefreiem Boden bestehen. Hierbei wird unter erythemwirksamer UV-Strahlungsflußdichte die Größe verstanden, welche die spektrale Empfindlichkeit der menschlichen Haut für Rötung durch UV-Einwirkung im Spektralbereich von 290 bis 400nm berücksichtigt.

Für den schneefreien Boden wird eine im Spektralbereich von 290 bis 400nm wellenlängenunabhängige isotrope UV-Bodenalbedo mit einem Wert von 0,03 angenommen, während für den schneebedeckten Boden eine UV-Bodenalbedo von 0,85 und für den teilweise schneebedeckten Boden ein UV-Bodenalbedo von 0,50 angenommen wird. Die optische Dicke des Aerosols im UV-Spektralbereich wird in diesem Beispiel als konstant angenommen, und zwar mit einem Wert, der einer optischen Dicke von 0,2 bei der Wellenlänge 0,55 μm entspricht. Ferner wird auch die Abnahme der optischen Dicke des Aerosols mit der Geländehöhe berücksichtigt.

Für schneefreien Boden wird die erythemwirksame UV-Strahlungsflußdichte gemäß Gl.(5 ermittelt mit:

$$UVerythem(O3, z, sza, opd) =$$

$$(0.794591 * e^{-0.0509768 = opd} + 0.140257) *$$

$(510.20418 + 0.56354260 * sza - 0.23091040 * sza^2 + 0.00028181759 * sza^3 + 3.8327128 * 10^{-5} * sza^4 - (2.3897392 * 10^{-7}) * sza^5$

$+ (13.951441 - 0.11194501 * sza + 0.0031988493 * sza^2 - 0.00020872375 * sza^3 + 3.0125029 * 10^{-6} * sza^4 - 1.2745954 * 10^{-8} * sza^5) * (z * 4)$

$+ (-0.49736838 + 0.0049108703 * sza - 0.00017665002 * sza^2 + 9.2427409 * 10^{-6} * sza^3 - 1.2980119 * 10^{-7} * sza^4 + 5.5284446 * 10^{-10} * sza^5) * (z * 4)^2$

$+ (0.012506738 - 0.00012638193 * sza + 47448107 * 10^{-6} * sza^2 - 2.3648445 * 10^{-7} * sza^3 + 3.2550523 * 10^{-9} * sza^4 - 1.3671391 * 10^{-11} * sza^5) * (z * 4)^3$

$+ (-57.957108 + 0.018697043 * sza + 0.019653410 * sza^2 + 0.00014143825 * sza^3 - 6.2112118 * 10^{-6} * sza^1 + 3.4130968 * 10^{-8} * sza^5) * ((03 - 180.0)/20.)$

$+ (-1.6809458 + 0.017892802 * sza - 0.00069857920 * sza^2 + 3.3101588 * 10^{-5} * sza^3 - 44775136 * 10^{-7} * sza^4 + 1.8583037 * 10^{-9} * sza^5) * ((03 - 180.0)/20.) * (z * 4)$

$+ (0.059711761 - 0.00071318594 * sza + 2.9968515 * 10^{-5} * sza^2 - 1.3470159 * 10^{-6} * sza^3 + 1.8319632 * 10^{-8} * sza^4 - 7.7609877 * 10^{-11} * sza^5) * ((O3 - 180.0)/20.) * (z * 4)^2$

$+ (-0.0015088040 + 1.7944364 * 10^{-5} * sza - 7.6195930 * 10^{-7} * sza^2 + 3.3543192 * 10^{-8} * sza^3 - 44904497 * 10^{-10} * sza^4 + 1.8755097 * 10^{-12} * sza^5) * ((O3 - 180.0)/20.) * (z * 4)^3$

$+ (3.7065718 - 0.0049669960 * sza - 0.00093686582 * sza^2 - 1.6524994 * 10^{-5} * sza^3 + 46530307 * 10^{-7} * sza^4 - 2.3972347 * 10^{-9} * sza^5) * ((03 - 180.0)/20.)^2$

$+ (0.10864932 - 0.0012787741 * sza + 5.4793034 * 10^{-5} * sza^2 - 2.3546769 * 10^{-6} * sza^3 + 3.0805197 * 10^{-8} * sza^4 - 1.2562536 * 10^{-10} * sza^5) * ((O3 - 180.0)/20.)^2 * (z * 4)$

$+ (-0.0038758366 + 49905607 * 10^{-5} * sza - 2.2291359 * 10^{-6} * sza^2 + 9.3982087 * 10^{-3} * sza^3 - 1.2492823 * 10^{-9} * sza^4 + 5.2320434 * 10^{-12} * sza^5) * ((O3 - 180.0)/20.)^2 * (z * 4)^2$

$+ (9.8235179 * 10^{-5} - 1.2583546 * 10^{-6} * sza + 5.6382820 * 10^{-8} * sza^2 - 2.3321797 * 10^{-9} *$

$$sza^3 + 3.0309427 * 10^{-11} * sza^4 - 1.2586983 * 10^{-13} * sza^5) * ((O3 - 180.0)/20.)^2 * (z * 4)^3$$

$$+ (-0.093949447 + 0.00018223477 * sza + 1.9002251 * 10^{-5} * sza^2 + 5.2897951 * 10^{-7} *$$

$$sza^3 - 1.2790851 * 10^{-8} * sza^4 + 6.3891664 * 10^{-11} * sza^5) * ((O3 - 180.0)/20.)^3$$

$$+ (-0.0027040020 + 3.4143271 * 10^{-5} * sza - 1.5277506 * 10^{-6} * sza^2 + 6.2890250 * 10^{-8} *$$

$$sza^3 - 8.0910603 * 10^{-10} * sza^4 + 3.2684995 * 10^{-12} * sza^5) * ((O3 - 180.0)/20.)^3 * (z * 4)$$

$$+ (9.8858332 * 10^{-5} - 1.3109935 * 10^{-6} * sza + 6.0400422 * 10^{-8} * sza^2 - 2.4814975 * 10^{-9} *$$

$$sza^3 + 3.2634138 * 10^{-11} * sza^4 - 1.3586470 * 10^{-13} sza^5) * ((O3 - 180.0)/20.)^3 * (z * 4)^2$$

$$+ (-2.5083741 * 10^{-6} + 3.2881673 * 10^{-8} \prime sza - 1.5141186 * 10^{-9} * sza^2 + 6.1260233 *$$

$$10^{-11} sza^3 - 7.9344363 * 10^{-13} * sza^4 + 3.2536086 * 10^{-15} * sza^5) * ((O3 - 180.0)/20.)^3 * (z * 4)^3)) \quad (5)$$

Für schneebedeckten Boden gilt analog gemäß Gl.(6) :

$$UVerythem(O3, z, sza, opd) =$$

$$(0.801062 * e^{-0.0199109 = opd} + .21295) *$$

$$(744.82837 + 0.54654448 * sza - 0.3151729 * sza^2 - 7.9710675 * 10^{-5} * sza^3 + 6.0228237 *$$

$$10^{-5} * sza^4 - 3.6160453 * 10^{-7} * sza^5$$

$$+ (13.980316 - 0.17230379 * sza + 0.0076620868 * sza^2 - 0.00030858998 * sza^3 +$$

$$3.8950397 * 10^{-6} * sza^4 - 1.5427345 * 10^{-8} * sza^5) * (z * 4)$$

$$+ (-0.79486218 + 0.0087952125 * sza - 0.00035120114 * sza^2 + 1.6211036 * 10^{-5} *$$

$$sza^3 - 2.1875327 * 10^{-7} * sza^4 + 9.1146350 * 10^{-10} * sza^5) * (z * 4)^2$$

$$+ (0.020519671 - 0.00021938183 * sza + 8.5986248 * 10^{-6} * sza^2 - 4.0589149 * 10^{-7} *$$

$$sza^3 + 5.4989948 * 10^{-9} * sza^4 - 2.2914581 * 10^{-11} * sza^5) * (z * 4)^3$$

$$+ (-86.435378 + 0.049973262 * sza + 0.027617279 * sza^2 + 0.00024504829 * sza^3 -$$

$$9.5111446 * 10^{-6} * sza^4 + 5.1430311 * 10^{-8} * sza^5) * ((O3 - 180.0)/20.)$$

$$+ (-1.8163896 + 0.026145486 * sza - 0.0012485826 * sza^2 + 4.6735567 * 10^{-5} * sza^3 -$$

$$5.8080747 * 10^{-7} * sza^4 + 2.3047928 * 10^{-9} * sza^5) * ((O3 - 180.0)/20.) * (z * 4)$$

$+(0.10499966-0.0012238824 * sza+5.0835136 * 10^{-5}*sza^2-2.2942330 * 10^{-6}*$

$sza^3+3.1032027* 10^{-8}* sza^4-1.3042199*10^{-10}* sza^5)*((O3-180.0)/20.)*(z*4)^2$

$+(-0.0027097231+2.9538523*10^{-5}*sza-1.1838537*10^{-6}*sza^2+5.5838228*10^{-8}*$

$sza^3-7.6190621*10^{-10}*sza^4+3.2046338*10^{-12}*sza^5)*((O3-180.0)/20.)*(z*4)^3$

$+(5.5840202-0.0082260536 * sza-0.0013571859 * sza^2-2.5747269*10^{-5}* sza^3+$

$7.0360953 * 10^{-7}*sza^4-3.5983927 *10^{-9}*sza^5)*((O3 - 180.0)/20.)^2$

$+ (0.12075276 - 0.0018100274 *sza + 8.8928937 *10^{-5}*sza^2-3.2339098 * 10^{-6}*$

$sza^3+ 3.9615636 * 10^{-8}* sza^4-1.5572669 * 10^{-10}*sza^5)*((O3-180.0)/20.)^2(z*4)$

$+(-0.0070853672+8.2435257*10^{-5}*sza-3.4955323*10^{-6}*sza^2+1.5646155*10^{-7}*$

$sza^3-2.1053642* 10^{-9}* sza^4+ 8.8150285 * 10^{-12}* sza^5)* ((O3-180.0)/20.)^2* (z* 4)^2$

$+(0.00018281095-1.9437734* 10^{-6}* sza+7.9084037* 10^{-8}* sza^2-3.7554387* 10^{-9}*$

$sza^3+5.1149904*10^{-11}*sza^4-2.1451019*10^{-13}*sza^5)* ((O3-180.0)/20.)^2*(z*4)^3$

$+ (-0.14229575 +0.00028701410 * sza+2.8110798 * 10^{-5} *sza^2+ 8.0507080 * 10^{-7}*$

$sza^3-1.9263427*10^{-8}*sza^4+9.5823389 *10^{-11}* sza^5)*((O3-180.0)/20.)^3$

$+(-0.0031172065+4.7864190*10^{-5}*sza-2.3915873*10{-6}*sza^2+8.5552287*10^{-8}*$

$sza^3-1.0391554*10^{-9}* sza^4+4.0618929 *10^{-12}*sza^5)*((O3-180.0)/20.)^3*(z* 4)$

$+(0.00018430997-2.1347198*10^{-6}*sza+9.1993333*10^{-8}*sza^2-4.1010649* 10^{-9}*$

$sza^3+ 5.5004210 *10^{-11}*sza^4-2.2971660*10^{-13}*sza^5)*((O3-180.0)/20.)*(z*4)^2$

$+ (-4.7513116 * 10^{-6}+ 4.9163628 * 10^{-8}* sza-2.0270926 * 10^{-9}*sza^2+ 9.7263510 *$

$10^{-11}*sza^3-1.3246033*10^{-12}*sza^4+5.5457569*10^{-15}*sza^5)*((O3-180.0)/20.)^3* (z*4)^3) \quad (6)$

Für teilweise schneebedeckten Boden gilt analog gemäß Gl.(7):

$$UVerythem(O3, z, sza, opd) =$$

$$(0.790367 *e^{-0.0372151 =upd} + 0.167212) *$$

$(619.031 + 1.128906 * sza - 0.303467 * sza^2 + 0.0008506775 * sza^3 + 4.190207 * 10^{-5} *$

$sza^4 - 2.728775 * 10^{-7} * sza^5)$

$+ (14.8594 - 0.2248535 * sza + 0.00959015 * sza^2 - 0.0003596544 * sza^3 + 4.563481 *$

$10^{-6} * sza^4 - 1.861190 * 10^{-3} * sza^5) * (z * 4.)$

$+ (-0.660065 + 0.01091385 * sza - 0.000475883 * sza^2 + 1.750886 * 10^{-5} * sza^3 -$

$2.255547 * 10^{-7} * sza^4 + 9.363248 * 10^{-10} * sza^5) * (z * 4.)^2$

$+ (0.0165081 - 0.0002747774 * sza + 1.20550 * 10^{-5} * sza^2 - 4.413305 * 10^{-7} * sza^3 +$

$5.620677 * 10^{-9} * sza^4 - 2.317790 * 10^{-11} * sza^5) * (z\ 4.)^{*3}$

$+ (-71.6113 + 0.05224609 * sza + 0.0227356 * sza^2 + 0.0002121925 * sza^3 - 8.113682 *$

$10^{-6} * sza^4 + 4.385947 * 10^{-8} * sza^6) * ((O3 - 180.0)/20.)$

$+(-1.87738 + 0.03576660 * sza - 0.00167751 * sza^2 + 5.669892 * 10^{-5} * sza^3 - 6.963965 *$

$10^{-7} * sza^4 + 2.811248 * 10^{-9} * sza^5) * ((O3 - 180.0)/20.) * (z * 4.)$

$+ (0.0840569 - 0.001587868 * sza + 7.24792 * 10^{-5} * sza^2 - 2.541579 * 10^{-6} * sza^3 +$

$3.222522 * 10^{-8} * sza^4 - 1.338094 * 10^{-10} * sza^5) * ((O3 - 180.0)/20.) * (z * 4.)^2$

$+ (-0.00210190 + 3.857911 * 10^{-5} * sza - 1.76206 * 10^{-6} * sza^2 + 6.172922 * 10^{-3} *$

$sza^3 - 7.794370 * 10^{-10} * sza^4 + 3.221423 * 10^{-12} * sza^5) * ((O3 - 180.0)/20.) * (z * 4.)^3$

$+ (4.62158 - 0.01095581 * sza - 0.000907898 * sza^2 - 2.634525 * 10^{-5} * sza^3 + 6.398186 *$

$10^{-7} * sza^4 - 3.215973 * 10^{-9} * sza^6) * ((O3 - 180.0)/20.)^2$

$+ (0.123844 - 0.002576828 * sza + 0.000124454 * sza^2 - 4.045665 * 10^{-6} * sza^3 +$

$4.882168 * 10^{-8} * sza^4 - 1.944613 * 10^{-10} * sza^5) * ((O3 - 180.0)/20.)^2 * (z * 4.)$

$+ (-0.00560665 + 0.0001119077 * sza - 5.23776 * 10^{-6} * sza^2 + 1.783483 * 10^{-7} *$

$sza^3 - 2.232365 * 10^{-9} * sza^4 + 9.185541 * 10^{-12} * sza^5) * ((O3 - 180.0)/20.)^2 * (z * 4.)^2$

$+ (0.000140205 - 2.695248 * 10^{-6} * sza + 1.24739 * 10^{-7} * sza^2 - 4.273716 * 10^{-9} *$

$sza^3 + 5.329071 * 10^{-11} * sza^4 - 2.189360 * 10^{-13} * sza^5) * ((O3 - 180.0)/20.)^2 * (z * 4.)^3$

$+ (-0.117653 + 0.0003852844 * sza + 1.56164 * 10^{-5} * sza^2 + 8.493662 * 10^{-7} * sza^3 -$

$1.793524 * 10^{-8} * sza^4 + 8.728307 * 10^{-11} * sza^5) * ((O3 - 180.0)/20.)^3$

$+ (-0.00318766 + 6.940961 * 10^{-5} * sza - 3.39840 * 10^{-6} * sza^2 + 1.085282 * 10^{-7} *$

$sza^3 - 1.292847 * 10^{-9} * sza^4 + 5.121237 * 10^{-12} * sza^5) * ((O3 - 180.0)/20.)^3 * (z * 4.)$

$+ (0.000145316 - 3.011897 * 10^{-6} * sza + 1.42260 * 10^{-7} * sza^2 - 4.770300 * 10^{-9} *$

$sza^3 + 5.911716 * 10^{-11} * sza^4 - 2.428058 * 10^{-13} * sza^5) * ((O3 - 180.0)/20.)^3 * (z * 4.)^2$

$+ (-3.63658 * 10^{-6} + 7.200288 * 10^{-8} * sza - 3.37786 * 10^{-9} * sza^2 + 1.134879 * 10^{-10} *$

$sza^3 - 1.409095 * 10^{-12} * sza^4 + 5.748874 * 10^{-15} * sza^5) * ((O3 - 180.0)/20.)^3 * (z * 4.)^3)$   (7)

Bei den Ausführungsbeispielen gemäß Gl.'en (5) und (6) ergibt sich die erythemwirksame UV-Strahlungsflußdichte in der Einheit mW/m², wenn die Ozonsäule 03 in DU, die Geländehöhe z in km, der solare Zenitwinkel sza in Grad (°) und die optische Dicke der Wolke opd bei der Wellenlänge 0,55 um eingesetzt wird. Ist der Boden schneefrei, wird Gl. (5) angewendet; ist er schneebedeckt, wird Gl. (6) angewendet; ist er teilweise schneebedeckt, wird Gl.(7) angewendet.

Der UV-Index wird definitionsgemäß aus der erythemwirksamen UV-Strahlungsflußdichte durch Multiplikation mit dem Faktor 1/(25mW/m²) abgeleitet, während die Sonnenbrandzeit in Minuten definitionsgemäß der Kehrwert der erythemwirksamen UV-Strahlungsflußdichte, multipliziert mit dem Faktor 3500min* (mW/m²) ist.

**Patentansprüche**

1. Verfahren zum Bestimmen von bodennaher UV-Strahlung unter Verwendung von Strahlungstransportsimulationen, **dadurch gekennzeichnet, daß**

    a) mit Hilfe der Strahlungstransportsimulation ein Datensatz erstellt wird, welcher für eine große Variationsbreite der UV-relevanten Einflußgrößen eine zu bestimmende UV-Strahlungsgröße beinhaltet,

    $b_1$) die Abhängigkeit der berechneten UV-Strahlungsgröße UV vom Ozongehalt der Atmosphäre und von der Geländehöhe mit einem zweidimensionalen Polynom 3. Grades gemäß Gl.(1) angepaßt wird:

$$UV(O3,z) =$$

$$cf1 + cf2 * z + cf3 * z^2 + cf4 * z^3$$

$$+ cf5 * O3 + cf6 * O3 * z + cf7 * O3 * z^2 + cf8 * O3 * z^3$$

$$+ cf9 * O3^2 + cf10 * O3^2 * z + cf11 * O3^2 * z^2 + cf12 * O3^2 * z^3$$

$$+ cf13 * O3^3 + cf14 * O3^3 * z + cf15 * O3^3 * z^2 + cf16 * O3^3 * z^3 \qquad (1)$$

    wobei mit 03 die Ozongesamtsäule in DU (Dobson Units), mit z die Geländehöhe in m, und mit cfn (n=1 bis 16) Polynom-Koeffizienten bezeichnet sind,

b$_2$) die in den Polynom-Koeffizienten cfn enthaltene Abhängigkeit der mit Gl.(1) berechneten UV-Strahlungsgröße vom solaren Zenitwinkel sza mit Hilfe eines eindimensionalen Polynoms 5. Grades gemäß Gl.(2) angepaßt wird:

$$cfn(sza) = cf0' + cf1' * sza^1 + cf2' * sza^2 + cf3' * sza^3 + cf4' * sza^4 + cf5' * sza^5 \qquad (2)$$

b$_3$)die Abhängigkeit der UV-Strahlungsgröße von der optischen Dicke opd der Wolke durch Multiplikation mit einem Reduktionsfaktor RF, welcher als das Verhältnis der UV-Strahlungsgröße bei bewölktem Himmel zu der UV-Strahlungsgröße der wolkenlosen Atmosphäre bei sonst gleicher Konfiguration der UV-Einflußgrößen 03, z und sza definiert ist, entsprechend der Funktion (3) angepaßt wird

$$RF(opd) = y0 * exp(y1 * opd) + y2 \qquad (3)$$

c) schließlich die Anpassung der Abhängigkeit der UV-Strahlungsgröße von den Größen 03, z, sza und opd durch Einsetzen von Gl.(2) in Gl.(1) und Multiplikation mit der Funktion (3) in Form von Gl.(4) erhalten wird:

$$UV(O3, z, sza, opd) =$$

$$(y0 * exp(y1 * opd) + y2) *$$

$$((a0 + a1 * sza^1 + a2 * sza^2 + a3 * sza^3 + a4 * sza^4 + a5 * sza^5)$$

$$+ (b0 + b1 * sza^1 + b2 * sza^2 + b3 * sza^3 + b4 * sza^4 + b5 * sza^5) * z$$

$$+ (c0 + c1 * sza^1 + c2 * sza^2 + c3 * sza^3 + c4 * sza^4 + c5 * sza^5) * z^2$$

$$+ (d0 + d1 * sza^1 + d2 * sza^2 + d3 * sza^3 + d4 * sza^4 + d5 * sza^5) * z^3$$

$$+ (e0 + e1 * sza^1 + e2 * sza^2 + e3 * sza^3 + e4 * sza^4 + e5 * sza^5) * O3$$

$$+ (f0 + f1 * sza^1 + f2 * sza^2 + f3 * sza^3 + f4 * sza^4 + f5 * sza^5) * O3 * z$$

$$+ (g0 + g1 * sza^1 + g2 * sza^2 + g3 * sza^3 + g4 * sza^4 + g5 * sza^5) * O3 * z^2$$

$$+ (h0 + h1 * sza^1 + h2 * sza^2 + h3 * sza^3 + h4 * sza^4 + h5 * sza^5) * O3 * z^3$$

$$+ (i0 + i1 * sza^1 + i2 * sza^2 + i3 * sza^3 + i4 * sza^4 + i5 * sza^5) * O3^2$$

$$+ (j0 + j1 * sza^1 + j2 * sza^2 + j3 * sza^3 + j4 * sza^4 + j5 * sza^5) * O3^2 * z$$

$$+ (k0 + k1 * sza^1 + k2 * sza^2 + k3 * sza^3 + k4 * sza^4 + k5 * sza^5) * O3^2 * z^2$$

$$+ (l0 + l1 * sza^1 + l2 * sza^2 + l3 * sza^3 + l4 * sza^4 + l5 * sza^5) * O3^2 * z^3$$

$$+ (m0 + m1 * sza^1 + m2 * sza^2 + m3 * sza^3 + m4 * sza^4 + m5 * sza^5) * O3^3$$

$$+ (n0 + n1 * sza^1 + n2 * sza^2 + n3 * sza^3 + n4 * sza^4 + n5 * sza^5) * O3^3 * z$$

$$+ (p0 + p1 * sza^1 + p2 * sza^2 + p3 * sza^3 + p4 * sza^4 + p5 * sza^5) * O3^3 * z^2$$

$$+ (q0 + q1 * sza^1 + q2 * sza^2 + q3 * sza^3 + q4 * sza^4 + q5 * sza^5) * O3^3 * z^3) \qquad (4)$$

**2.** Verfahren zum Bestimmen von bodennaher erythemwirksamen UV-Strahlungsflußdichte nach Anspruch 1 bei schneefreiem Boden für eine im Spektralbereich von 290 bis 400nm wellenlängenunabhängige, isotope UV-Bodenalbedo mit einem Wert von 0,03, wobei nachstehend die Polynom-Koeffizienten von y0 bis y2 sowie in tabellarischer Aufstellung in Zeilen jeweils die Polynom-Koeffizienten a bis q und in Spalten jeweils die Polynom-Koeffizienten a0, b0 ... q0 bis a5, b5, ... q5 angegeben sind: *y0* = 0.79459, *y1* = -0.0509768, *y2* = 0.140257

|   | 0 | 1 | 2 |
|---|---|---|---|
| a | 5.1020418e+02 | 5.6354260e-01 | -2.3091040e-01 |
| b | 1.3951441e+01 | -1.1194501e-01 | 3.1988493e-03 |
| c | -4.9736838e-01 | 4.9108703e-03 | -1.7665002e-04 |
| d | 1.2506738e-02 | -1.2638193e-04 | 4.7448107e-06 |
| e | -5.7957108e+01 | 1.8697043e-02 | 1.9653410e-02 |
| f | -1.6809458e+00 | 1.7892802e-02 | -6.9857920e-04 |
| g | 5.9711761e-02 | -7.1318594e-04 | 2.9968515e-05 |
| h | -1.5088040e-03 | 1.7944364e-05 | -7.6195930e-07 |
| i | 3.7065718e+00 | -4.9669960e-03 | -9.3686582e-04 |
| j | 1.0864932e-01 | -1.2787741e-03 | 5.4793034e-05 |
| k | -3.8758366e-03 | 4.9905607e-05 | -2.2291359e-06 |
| l | 9.8235179e-05 | -1.2583546e-06 | 5.6382820e-08 |
| m | -9.3949447e-02 | 1.8223477e-04 | 1.9002251e-05 |
| n | -2.7640020e-03 | 3.4143271e-05 | -1.5277506e-06 |
| p | 9.8858332e-05 | -1.3109935e-06 | 6.0400422e-08 |
| q | -2.5083741e-06 | 3.2881673e-08 | -1.5141186e-09 |

|   | 3 | 4 | 5 |
|---|---|---|---|
| a | 2.8181759e-04 | 3.8327128e-05 | -2.3897392e-07 |
| b | -2.0872375e-04 | 3.0125029e-06 | -1.2745954e-08 |
| c | 9.2427409e-06 | -1.2980119e-07 | 5.5284446e-10 |
| d | -2.3648445e-07 | 3.2550523e-09 | -1.3671391e-11 |
| e | 1.4143825e-04 | -6.2112118e-06 | 3.4130968e-08 |
| f | 3.3101588e-05 | -4.4775136e-07 | 1.8583037e-09 |
| g | -1.3470159e-06 | 1.8319632e-08 | -7.7609877e-11 |
| h | 3.3543192e-08 | -4.4904497e-10 | 1.8755097e-12 |
| i | -1.6524994e-05 | 4.6530307e-07 | -2.3972347e-09 |
| j | -2.3546769e-06 | 3.0805197e-08 | -1.2562536e-10 |
| k | 9.3982087e-08 | -1.2492823e-09 | 5.2320434e-12 |
| l | -2.3321797e-09 | 3.0509427e-11 | -1.2586983e-13 |
| m | 5.2897951e-07 | -1.2790851e-08 | 6.3891664e-11 |
| n | 6.2890250e-08 | -8.0910603e-10 | 3.2684995e-12 |
| p | -2.4814975e-09 | 3.2634138e-11 | -1.3586470e-13 |
| q | 6.1260233e-11 | -7.9344363e-13 | 3.2536086e-15 |

wobei bei Verwenden der vorstehend aufgeführten Polynom-Koeffizienten 03 in Gl.(4) von Anspruch 1 ersetzt ist durch: (03-180)/20.

**3.** Verfahren zum Bestimmen von bodennaher erythemwirksamen UV-Strahlungsflußdichte nach Anspruch 1 bei schneebedecktem Boden für eine im Spektralbereich von 290 bis 400nm wellenlängenunabhängige, isotope UV-Bodenalbedo mit einem Wert von 0,85, wobei nachstehend die Polynom-Koeffizienten von y0 bis y2 sowie in tabellarischen Aufstellung in Zeilen jeweils die Polynom-Koeffizienten a bis q und in Spalten jeweils die Polynom-Koeffizienten a0, b0 ... q0 bis a5, b5, ... q5 angegeben sind: *y0* = 0.801062, *y1* = -0.0199109, *y2* = 0.21295

|   | 0 | 1 | 2 |
|---|---|---|---|
| a | 7.4482837e+03 | 5.4654448e-01 | -3.1517295e-01 |
| b | 1.3980316e+01 | -1.7230379e-01 | 7.6620868e-03 |
| c | -7.9486218e-01 | 8.7952125e-03 | -3.5120114e-04 |
| d | 2.0519671e-02 | -2.1938183e-04 | 8.5986248e-06 |
| e | -8.6435378e+01 | 4.9973262e-02 | 2.7617279e-02 |
| f | -1.8163896e+00 | 2.6145486e-02 | -1.2485826e-03 |
| g | 1.0499966e-01 | -1.2238824e-03 | 5.0835136e-05 |
| h | -2.7097231e-03 | 2.9538523e-05 | -1.1838537e-06 |
| i | 5.5840202e+00 | -8.2260536e-03 | -1.3571859e-03 |
| j | 1.2075276e-01 | -1.8100274e-03 | 8.8928937e-05 |
| k | -7.0853672e-03 | 8.2435257e-05 | -3.4955323e-06 |
| l | 1.8281095e-04 | -1.9437734e-06 | 7.9084037e-08 |
| m | -1.4229575e-01 | 2.8701410e-04 | 2.8110798e-05 |
| n | -3.1172065e-03 | 4.7864190e-05 | -2.3915873e-06 |
| p | 1.8430997e-04 | -2.1347198e-06 | 9.1993333e-08 |
| q | -4.7513116e-06 | 4.9163628e-08 | -2.0270926e-09 |

|   | 3 | 4 | 5 |
|---|---|---|---|
| a | -7.9710675e-05 | 6.0228237e-05 | -3.6160453e-07 |
| b | -3.0858998e-04 | 3.8950397e-06 | -1.5427345e-08 |
| c | 1.6211036e-05 | -2.1875327e-07 | 9.1146350e-10 |
| d | -4.0589149e-07 | 5.4989948e-09 | -2.2914581e-11 |
| e | 2.4504829e-04 | -9.5111446e-06 | 5.1430311e-08 |
| f | 4.6735567e-05 | -5.8080747e-07 | 2.3047928e-09 |
| g | -2.2942330e-06 | 3.1032027e-08 | -1.3042199e-10 |
| h | 5.5838228e-08 | -7.6190621e-10 | 3.2046338e-12 |
| i | -2.5747269e-05 | 7.0360953e-07 | -3.5983927e-09 |
| j | -3.2339098e-06 | 3.9615536e-08 | -1.5572669e-10 |
| k | 1.5646155e-07 | -2.1053642e-09 | 8.8150285e-12 |
| l | -3.7554387e-09 | 5.1149904e-11 | -2.1451019e-13 |
| m | 8.0507080e-07 | -1.9263427e-08 | 9.5823389e-11 |
| n | 8.5552287e-08 | -1.0391554e-09 | 4.0618929e-12 |
| p | -4.1010649e-09 | 5.5004210e-11 | -2.2971660e-13 |
| q | 9.7263510e-11 | -1.3246033e-12 | 5.5457569e-15 |

wobei bei Verwenden der vorstehend aufgeführten Polynom-Koeffizienten 03 in Gl. (4) von Anspruch 1 ersetzt ist durch: (03-180)/20.

4. Verfahren zum Bestimmen von bodennaher erythemwirksamen UV-Strahlungsflußdichte nach Anspruch 1 bei teilweise schneebedeckten Boden für eine im Spektralbereich von 290 bis 400nm wellenlängenunabhängige, isotope UV-Bodenalbedo mit einem Wert von 0,50, wobei nachstehend zuerst die Polynom-Koeffizienten von y0 bis y2 sowie in tabellarischer Aufstellung in Zeilen jeweils die Polynom-Koeffizienten a bis q und in Spalten jeweils die Polynom-Koeffizienten a0, b0 ... q0 bis a5, b5, ... q5 angegeben sind: $y0 = 0.790367$, $y1 = -0.0372151$, $y2 = 0.167212$

|   | 0 | 1 | 2 |
|---|---|---|---|
| $a$ | 6.1903100e+02 | 1.1289060e+00 | -3.0346700e-01 |
| $b$ | 1.4859400e+01 | -2.2485350e-01 | 9.5901500e-03 |
| $c$ | -6.6006500e-01 | 1.0913850e-02 | -4.7588300e-04 |
| $d$ | 1.6508100e-02 | -2.7477740e-04 | 1.2055000e-05 |
| $e$ | -7.1611300e+01 | 5.2246090e-02 | 2.2735600e-02 |
| $f$ | -1.8773800e+00 | 3.5766600e-02 | -1.6775100e-03 |
| $g$ | 8.4056900e-02 | -1.5878680e-03 | 7.2479200e-05 |
| $h$ | -2.1019000e-03 | 3.8579110e-05 | -1.7620600e-06 |
| $i$ | 4.6215800e+00 | -1.0955810e-02 | -9.0789800e-04 |
| $j$ | 1.2384400e-01 | -2.5768280e-03 | 1.2445400e-04 |
| $k$ | -5.6066500e-03 | 1.1190770e-04 | -5.2377600e-06 |
| $l$ | 1.4020500e-04 | -2.6952480e-06 | 1.2473900e-07 |
| $m$ | -1.1765300e-01 | 3.8528440e-04 | 1.5616400e-05 |
| $n$ | -3.1876600e-03 | 6.9409610e-05 | -3.3984000e-06 |
| $p$ | 1.4531600e-04 | -3.0118970e-06 | 1.4226000e-07 |
| $q$ | -3.6365800e-06 | 7.2002880e-08 | -3.3778600e-09 |

|   | 3 | 4 | 5 |
|---|---|---|---|
| $a$ | 8.5067750e-04 | 4.1902070e-05 | -2.7287750e-07 |
| $b$ | -3.5965440e-04 | 4.5634810e-06 | -1.8611900e-08 |
| $c$ | 1.7508860e-05 | -2.2555470e-07 | 9.3632480e-10 |
| $d$ | -4.4133050e-07 | 5.6206770e-09 | -2.3177900e-11 |
| $e$ | 2.1219250e-04 | -8.1136820e-06 | 4.3859470e-08 |
| $f$ | 5.6698920e-05 | -6.9639650e-07 | 2.8112480e-09 |
| $g$ | -2.5415790e-06 | 3.2225220e-08 | -1.3380940e-10 |
| $h$ | 6.1729220e-08 | -7.7943700e-10 | 3.2214230e-12 |
| $i$ | -2.6345250e-05 | 6.3981860e-07 | -3.2159730e-09 |
| $j$ | -4.0456650e-06 | 4.8821680e-08 | -1.9446130e-10 |
| $k$ | 1.7834830e-07 | -2.2323550e-09 | 9.1855410e-12 |
| $l$ | -4.2737160e-09 | 5.3290710e-11 | -2.1893600e-13 |
| $m$ | 8.4936620e-07 | -1.7935240e-08 | 8.7283070e-11 |
| $n$ | 1.0852820e-07 | -1.2928470e-09 | 5.1212370e-12 |
| $p$ | -4.7703000e-09 | 5.9117160e-11 | -2.4280580e-13 |
| $q$ | 1.1348790e-10 | -1.4090950e-12 | 5.7488740e-15 |

wobei bei Verwenden der vorstehend aufgeführten Polynom-Koeffizienten 03 in Gl.(4) von Anspruch 1 ersetzt ist durch: (03-180)/20.

5. Verfahrene nach einem der Ansprüche 2 bis 4 zum Bestimmen eines UV-Index, wobei die erythemwirksame UV-Strahlungsflußdichte $UV_{erythem}$ in $mW/m^2$ mit dem Faktor $1/(25mW/m^2)$ multipliziert wird.

6. Verfahren nach einem der Ansprüche 2 bis 4 zum Bestimmen der Sonnenbrandzeit in Minuten, wobei der Kehrwert der UV-Strahlungsflußdichte $UV_{erythem}$ in $mW/m^2$ mit dem Faktor $3500$ $(mW/m^2)$ multipliziert wird.

7. Einrichtung zum Durchführen des Verfahrens nach Anspruch 5 **gekennzeichnet durch** Mittel eingerichtet für die rechnerische Ermittlung der Gl. (4) in Anspruch 1 zum Herstellen von UV-Index-Karten.

8. Einrichtung zum Durchführen des Verfahrens nach Anspruch 6 **gekennzeichnet durch** Mittel eingerichtet für die rechnerische Ermittlung der Gl. (4) in Anspruch 1 zum Herstellen von Sonnenbrandzeit-Karten.

**Claims**

1. A method of determining near-ground UV radiation in making use of radiative transfer simulations **characterized by**

a) a data set including a UV radiation parameter to be determined for a wide variation of UV relevant influencing factors is generated with the aid of radiative transfer simulations ,

$b_1$) the dependency of the computed UV radiation parameter UV on the ozone content of the atmosphere and on the surface altitude with a two-dimensional polynomial of the third degree is fitted according to equation (1):

$$UV(O3,z) =$$

$$cf1 + cf2 * z + cf3 * z^2 + cf4 * z^3$$

$$+ cf5 * O3 + cf6 * O3 * z + cf7 * O3 * z^2 + cf8 * O3 * z^3$$

$$+ cf9 * O3^2 + cf10 * O3^2 * z + cf11 * O3^2 * z^2 + cf12 * O3^2 * z^3$$

$$+ cf13 * O3^3 + cf14 * O3^3 * z + cf15 * O3^3 * z^2 + cf16 * O3^3 * z^3 \qquad (1)$$

where 03 is the ozone total column in DU (Dobson Units) and z is the surface altitude in m and cfn (n = 1 to 16) are the polynomial coefficients,

$b_2$) the dependency of the UV radiation parameter computed by means of equation (1) contained in the polynomial coefficients cfn as a function of the solar zenith angle sza is fitted with the aid of a one-dimensional polynomial of the fifth degree according to equation (2):

$$cfn(sza) = cf0' + cf1' * sza^1 + cf2' * sza^2 + cf3' * sza^3 + cf4' * sza^4 + cf5' * sza^5 \qquad (2)$$

$b_3$) the dependency of the UV radiation parameter on the cloud optical depth opd by multiplication with a reduction factor RF defined as the ratio of the UV radiation parameter in a cloudy sky to the UV radiation parameter in a cloud free atmosphere for otherwise the same configuration of the UV influencing factors 03, z and sza is fitted in accordance with the function (3)

$$RF(opd) = y0 * exp(y1 * opd) + y2 \qquad (3)$$

c) ultimately the dependency of the UV radiation parameter on the parameters 03, z, sza and opd by inserting equation (2) in equation (1) and multiplying with function (3) is obtained in form of equation (4):

$$UV(O3, z, sza, opd) =$$

$$(y0 * exp(y1 * opd) + y2) *$$

$$((a0 + a1 * sza^1 + a2 * sza^2 + a3 * sza^3 + a4 * sza^4 + a5 * sza^5)$$

$$+ (b0 + b1 * sza^1 + b2 * sza^2 + b3 * sza^3 + b4 * sza^4 + b5 * sza^5) * z$$

$$+ (c0 + c1 * sza^1 + c2 * sza^2 + c3 * sza^3 + c4 * sza^4 + c5 * sza^5) * z^2$$

$$+ (d0 + d1 * sza^1 + d2 * sza^2 + d3 * sza^3 + d4 * sza^4 + d5 * sza^5) * z^3$$

$$+ (e0 + e1 * sza^1 + e2 * sza^2 + e3 * sza^3 + e4 * sza^4 + e5 * sza^5) * O3$$

$$+ (f0 + f1 * sza^1 + f2 * sza^2 + f3 * sza^3 + f4 * sza^4 + f5 * sza^5) * O3 * z$$

$$+ (g0 + g1 * sza^1 + g2 * sza^2 + g3 * sza^3 + g4 * sza^4 + g5 * sza^5) * O3 * z^2$$

$$+ (h0 + h1 * sza^1 + h2 * sza^2 + h3 * sza^3 + h4 * sza^4 + h5 * sza^5) * O3 * z^3$$

$$+ (i0 + i1 * sza^1 + i2 * sza^2 + i3 * sza^3 + i4 * sza^4 + i5 * sza^5) * O3^2$$

$$+ (j0 + j1 * sza^1 + j2 * sza^2 + j3 * sza^3 + j4 * sza^4 + j5 * sza^5) * O3^2 * z$$

$$+ (k0 + k1 * sza^1 + k2 * sza^2 + k3 * sza^3 + k4 * sza^4 + k5 * sza^5) * O3^2 * z^2$$

$$+ (l0 + l1 * sza^1 + l2 * sza^2 + l3 * sza^3 + l4 * sza^4 + l5 * sza^5) * O3^2 * z^3$$

$$+ (m0 + m1 * sza^1 + m2 * sza^2 + m3 * sza^3 + m4 * sza^4 + m5 * sza^5) * O3^3$$

$$+ (n0 + n1 * sza^1 + n2 * sza^2 + n3 * sza^3 + n4 * sza^4 + n5 * sza^5) * O3^3 * z$$

$$+ (p0 + p1 * sza^1 + p2 * sza^2 + p3 * sza^3 + p4 * sza^4 + p5 * sza^5) * O3^3 * z^2$$

$$+ (q0 + q1 * sza^1 + q2 * sza^2 + q3 * sza^3 + q4 * sza^4 + q5 * sza^5) * O3^3 * z^3) \qquad (4)$$

2. A method for determining near-ground erythemal radiation flux density according to claim 1 for the case of snow-free ground for an isotropic UV ground albedo with a value of 0.03 in the spectral range 290 to 400nm irrespective of the wavelength, whereby following the polynomial coefficients from y0 to y2 as well as tabulated in lines each of the polynomial coefficients a to q and tabulated in columns the polynomial coefficients a0, b0 ... q0 to a5, b5, ... q5 are specified by y0 = 0.79459, y1 = -0.0509768, y2 = 0.140257

|   | 0 | 1 | 2 |
|---|---|---|---|
| a | 5.1020418e+02 | 5.6354260e-01 | -2.3091040e-01 |
| b | 1.3951441e+01 | -1.1194501e-01 | 3.1988493e-03 |
| c | -4.9736838e-01 | 4.9108703e-03 | -1.7665002e-04 |
| d | 1.2506738e-02 | -1.2638193e-04 | 4.7448107e-06 |
| e | -5.7957108e+01 | 1.8697043e-02 | 1.9653410e-02 |
| f | -1.6809458e+00 | 1.7892802e-02 | -6.9857920e-04 |
| g | 5.9711761e-02 | -7.1318594e-04 | 2.9968515e-05 |
| h | -1.5088040e-03 | 1.7944364e-05 | -7.6195930e-07 |
| i | 3.7065718e+00 | -4.9669960e-03 | -9.3686582e-04 |
| j | 1.0864932e-01 | -1.2787741e-03 | 5.4793034e-05 |
| k | -3.8758366e-03 | 4.9905607e-05 | -2.2291359e-06 |
| l | 9.8235179e-05 | -1.2583546e-06 | 5.6382820e-08 |
| m | -9.3949447e-02 | 1.8223477e-04 | 1.9002251e-05 |
| n | -2.7640020e-03 | 3.4143271e-05 | -1.5277506e-06 |
| p | 9.8858332e-05 | -1.3109935e-06 | 6.0400422e-08 |
| q | -2.5083741e-06 | 3.2881673e-08 | -1.5141186e-09 |

|   | 3 | 4 | 5 |
|---|---|---|---|
| a | 2.8181759e-04 | 3.8327128e-05 | -2.3897392e-07 |
| b | -2.0872375e-04 | 3.0125029e-06 | -1.2745954e-08 |
| c | 9.2427409e-06 | -1.2980119e-07 | 5.5284446e-10 |
| d | -2.3648445e-07 | 3.2550523e-09 | -1.3671391e-11 |
| e | 1.4143825e-04 | -6.2112118e-06 | 3.4130968e-08 |
| f | 3.3101588e-05 | -4.4775136e-07 | 1.8583037e-09 |
| g | -1.3470159e-06 | 1.8319632e-08 | -7.7609877e-11 |
| h | 3.3543192e-08 | -4.4904497e-10 | 1.8755097e-12 |
| i | -1.6524994e-05 | 4.6530307e-07 | -2.3972347e-09 |
| j | -2.3546769e-06 | 3.0805197e-08 | -1.2562536e-10 |
| k | 9.3982087e-08 | -1.2492823e-09 | 5.2320434e-12 |
| l | -2.3321797e-09 | 3.0509427e-11 | -1.2586983e-13 |
| m | 5.2897951e-07 | -1.2790851e-08 | 6.3891664e-11 |
| n | 6.2890250e-08 | -8.0910603e-10 | 3.2684995e-12 |
| p | -2.4814975e-09 | 3.2634138e-11 | -1.3586470e-13 |
| q | 6.1260233e-11 | -7.9344363e-13 | 3.2536086e-15 |

whereby using above listed polynomial coefficients the parameter 03 in equation (4) of claim 1 is replaced by (03-180)/20.

3. A method for determining near-ground erythemal radiation flux density according to claim 1 for the case of snow-covered ground for an isotropic UV ground albedo with a value of 0.85 in the spectral range 290 to 400nm irrespective of the wavelength, whereby following the polynomial coefficients from y0 to y2 as well as tabulated in lines each of the polynomial coefficients a to q and tabulated in columns the polynomial coefficients as, b0 ... q0 to a5, b5, ...q5 are specified y0 = 0.801062 y1 = -0.0199109, y2 = 0.21295

|   | 0 | 1 | 2 |
|---|---|---|---|
| a | 7.4482837e+03 | 5.4654448e-01 | -3.1517295e-01 |
| b | 1.3980316e+01 | -1.7230379e-01 | 7.6620868e-03 |
| c | -7.9486218e-01 | 8.7952125e-03 | -3.5120114e-04 |
| d | 2.0519671e-02 | -2.1938183e-04 | 8.5986248e-06 |
| e | -8.6435378e+01 | 4.9973262e-02 | 2.7617279e-02 |
| f | -1.8163896e+00 | 2.6145486e-02 | -1.2485826e-03 |
| g | 1.0499966e-01 | -1.2238824e-03 | 5.0835136e-05 |
| h | -2.7097231e-03 | 2.9538523e-05 | -1.1838537e-06 |
| i | 5.5840202e+00 | -8.2260536e-03 | -1.3571859e-03 |
| j | 1.2075276e-01 | -1.8100274e-03 | 8.8928937e-05 |
| k | -7.0853672e-03 | 8.2435257e-05 | -3.4955323e-06 |
| l | 1.8281095e-04 | -1.9437734e-06 | 7.9084037e-08 |
| m | -1.4229575e-01 | 2.8701410e-04 | 2.8110798e-05 |
| n | -3.1172065e-03 | 4.7864190e-05 | -2.3915873e-06 |
| p | 1.8430997e-04 | -2.1347198e-06 | 9.1993333e-08 |
| q | -4.7513116e-06 | 4.9163628e-08 | -2.0270926e-09 |

|   | 3 | 4 | 5 |
|---|---|---|---|
| a | -7.9710675e-05 | 6.0228237e-05 | -3.6160453e-07 |
| b | -3.0858998e-04 | 3.8950397e-06 | -1.5427345e-08 |
| c | 1.6211036e-05 | -2.1875327e-07 | 9.1146350e-10 |
| d | -4.0589149e-07 | 5.4989948e-09 | -2.2914581e-11 |
| e | 2.4504829e-04 | -9.5111446e-06 | 5.1430311e-08 |
| f | 4.6735567e-05 | -5.8080747e-07 | 2.3047928e-09 |
| g | -2.2942330e-06 | 3.1032027e-08 | -1.3042199e-10 |
| h | 5.5838228e-08 | -7.6190621e-10 | 3.2046338e-12 |
| i | -2.5747269e-05 | 7.0360953e-07 | -3.5983927e-09 |
| j | -3.2339098e-06 | 3.9615536e-08 | -1.5572669e-10 |
| k | 1.5646155e-07 | -2.1053642e-09 | 8.8150285e-12 |
| l | -3.7554387e-09 | 5.1149904e-11 | -2.1451019e-13 |
| m | 8.0507080e-07 | -1.9263427e-08 | 9.5823389e-11 |
| n | 8.5552287e-08 | -1.0391554e-09 | 4.0618929e-12 |
| p | -4.1010649e-09 | 5.5004210e-11 | -2.2971660e-13 |
| q | 9.7263510e-11 | -1.3246033e-12 | 5.5457569e-15 |

whereby using above listed polynomial coefficients the parameter 03 in equation (4) of claim 1 is replaced by (03-180)/20.

4.  A method for determining near-ground erythemal radiation flux density according to claim 1 for the case of partly snow-covered ground for an isotropic UV ground albedo with a value of 0.50 in the spectral range 290 to 400nm irrespective of the wavelength, whereby following the polynomial coefficients from y0 to y2 as well as tabulated in lines each of the polynomial coefficients a to q and tabulated in columns the polynomial coefficients a0, b0 ... q0 to a5, b5, ...q5 are specified by y0 = 0.790367, y1 = -0.0372151, y2 = 0.167212

|   | 0 | 1 | 2 |
|---|---|---|---|
| a | 6.1903100e+02 | 1.1289060e+00 | -3.0346700e-01 |
| b | 1.4859400e+01 | -2.2485350e-01 | 9.5901500e-03 |
| c | -6.6006500e-01 | 1.0913850e-02 | -4.7588300e-04 |
| d | 1.6508100e-02 | -2.7477740e-04 | 1.2055000e-05 |
| e | -7.1611300e+01 | 5.2246090e-02 | 2.2735600e-02 |
| f | -1.8773800e+00 | 3.5766600e-02 | -1.6775100e-03 |
| g | 8.4056900e-02 | -1.5878680e-03 | 7.2479200e-05 |
| h | -2.1019000e-03 | 3.8579110e-05 | -1.7620600e-06 |
| i | 4.6215800e+00 | -1.0955810e-02 | -9.0789800e-04 |
| j | 1.2384400e-01 | -2.5768280e-03 | 1.2445400e-04 |
| k | -5.6066500e-03 | 1.1190770e-04 | -5.2377600e-06 |
| l | 1.4020500e-04 | -2.6952480e-06 | 1.2473900e-07 |
| m | -1.1765300e-01 | 3.8528440e-04 | 1.5616400e-05 |

|   | 0 | 1 | 2 |
|---|---|---|---|
| n | -3.1876600e-03 | 6.9409610e-05 | -3.3984000e-06 |
| p | 1.4531600e-04 | -3.0118970e-06 | 1.4226000e-07 |
| q | -3.6365800e-06 | 7.2002880e-08 | -3.3778600e-09 |

|   | 3 | 4 | 5 |
|---|---|---|---|
| a | 8.5067750e-04 | 4.1902070e-05 | -2.7287750e-07 |
| b | -3.5965440e-04 | 4.5634810e-06 | -1.8611900e-08 |
| c | 1.7508860e-05 | -2.2555470e-07 | 9.3632480e-10 |
| d | -4.4133050e-07 | 5.6206770e-09 | -2.3177900e-11 |
| e | 2.1219250e-04 | -8.1136820e-06 | 4.3859470e-08 |
| f | 5.6698920e-05 | -6.9639650e-07 | 2.8112480e-09 |
| g | -2.5415790e-06 | 3.2225220e-08 | -1.3380940e-10 |
| h | 6.1729220e-08 | -7.7943700e-10 | 3.2214230e-12 |
| i | -2.6345250e-05 | 6.3981860e-07 | -3.2159730e-09 |
| j | -4.0456650e-06 | 4.8821680e-08 | -1.9446130e-10 |
| k | 1.7834830e-07 | -2.2323550e-09 | 9.1855410e-12 |
| l | -4.2737160e-09 | 5.3290710e-11 | -2.1893600e-13 |
| m | 8.4936620e-07 | -1.7935240e-08 | 8.7283070e-11 |
| n | 1.0852820e-07 | -1.2928470e-09 | 5.1212370e-12 |
| p | -4.7703000e-09 | 5.9117160e-11 | -2.4280580e-13 |
| q | 1.1348790e-10 | -1.4090950e-12 | 5.7488740e-15 |

whereby using above listed polynomial coefficients the parameter 03 in equation (4) of claim 1 is replaced by (03-180) /20.

5. A method according to any of the claims 2 to 4 for determining an UV index, whereby the minimal erythemal radiation flux density $UV_{erythem}$ in $mW/m^2$ is multiplied by the factor $1/(25mW/m^2)$.

6. A method according any of the claims 2 to 4 for determining the sunburn time in minutes, the inverse minimal erythemal radiation flux density $UV_{erythem}$ in $mW/m^2$ is multiplied by the factor $3500\ (mW/m^2)$.

7. A device for carrying out the method according to claim 5, **characterized by** means being installed for computing equation (4) in claim 1 for the production of UV index maps.

8. A device for carrying out the method according to claim 6, **characterized by** means being installed for computing equation (4) in claim 1 for the production of sunburn time maps.

**Revendications**

1. Procédé pour déterminer le rayonnement UV à proximité. du sol en utilisant des simulations de transport de rayonnement, **caractérisé en ce que**

   a) à l'aide de la simulation de transport de rayonnement, on élabore un enregistrement qui contient une grandeur de rayonnement UV à déterminer pour une grande amplitude de variation des paramètres importants pour les UV,

   $b_1$) la dépendance entre la grandeur de rayonnement UV calculée et la teneur en ozone de l'atmosphère et la hauteur du terrain est adaptée avec un polynôme du 3ème degré à deux dimensions selon l'équation (1) :

   $$UV(O3,z) =$$

   $$cf1 + cf2 * z + cf3 * z^2 + cf4 * z^3$$

   $$+ cf5 * O3 + cf6 * O3 * z + cf7 * O3 * z^2 + cf8 * O3 * z^3$$

   $$+ cf9 * O3^2 + cf10 * O3^2 * z + cf11 * O3^2 * z^2 + cf12 * O3^2 * z^3$$

   $$+ cf13 * O3^3 + cf14 * O3^3 * z + cf15 * O3^3 * z^2 + cf16 * O3^3 * z^3 \qquad (1)$$

   dans laquelle 03 désigne 1a colonne globale d'ozone en DU (Dobson Units), z la hauteur de terrain en mètres et cfn (n=1 à 16) des coefficients du polynôme,

   $b_2$) la dépendance, incluse dans le coefficient du polynôme cfn, entre la grandeur de rayonnement UV calculée avec l'équation (1) et l'angle zénithal solaire sza est adaptée à l'aide d'un polynôme du 5ème degré à une dimension selon l'équation (2):

   $$cfn(sza) = cf0' + cf1' * sza^1 + cf2' * sza^2 + cf3' * sza^3 + cf4' * sza^4 + cf5' * sza^5 \qquad (2)$$

   $b_3$) la dépendance entre la grandeur de rayonnement UV et l'épaisseur optique opd du nuage est adaptée par multiplication avec un facteur de réduction RF, qui est défini comme étant le rapport entre la grandeur de rayonnement UV avec un ciel nuageux et la grandeur de rayonnement UV de l'atmosphère sans nuage avec une configuration identique par ailleurs des paramètres UV 03, z et zsa, selon la fonction (3)

   $$RF(opd) = y0 * exp(y1 * opd) + y2 \qquad (3)$$

   c) enfin l'ajustement de la dépendance entre la grandeur de rayonnement UV et les grandeurs 03, z, sza et opd est obtenu par la substitution de l'équation (2) dans l'équation (1) et multiplication avec la fonction (3) sous la forme de l'équation (4) :

   $$UV(O3, z, sza, opd) =$$

   $$(y0 * exp(y1 * opd) + y2) *$$

   $$((a0 + a1 * sza^1 + a2 * sza^2 + a3 * sza^3 + a4 * sza^4 + a5 * sza^5)$$

   $$+ (b0 + b1 * sza^1 + b2 * sza^2 + b3 * sza^3 + b4 * sza^4 + b5 * sza^5) * z$$

   $$+ (c0 + c1 * sza^1 + c2 * sza^2 + c3 * sza^3 + c4 * sza^4 + c5 * sza^5) * z^2$$

$$+ (d0 + d1 * sza^1 + d2 * sza^2 + d3 * sza^3 + d4 * sza^4 + d5 * sza^5) * z^3$$

$$+ (e0 + e1 * sza^1 + e2 * sza^2 + e3 * sza^3 + e4 * sza^4 + e5 * sza^5) * O3$$

$$+ (f0 + f1 * sza^1 + f2 * sza^2 + f3 * sza^3 + f4 * sza^4 + f5 * sza^5) * O3 * z$$

$$+ (g0 + g1 * sza^1 + g2 * sza^2 + g3 * sza^3 + g4 * sza^4 + g5 * sza^5) * O3 * z^2$$

$$+ (h0 + h1 * sza^1 + h2 * sza^2 + h3 * sza^3 + h4 * sza^4 + h5 * sza^5) * O3 * z^3$$

$$+ (i0 + i1 * sza^1 + i2 * sza^2 + i3 * sza^3 + i4 * sza^4 + i5 * sza^5) * O3^2$$

$$+ (j0 + j1 * sza^1 + j2 * sza^2 + j3 * sza^3 + j4 * sza^4 + j5 * sza^5) * O3^2 * z$$

$$+ (k0 + k1 * sza^1 + k2 * sza^2 + k3 * sza^3 + k4 * sza^4 + k5 * sza^5) * O3^2 * z^2$$

$$+ (l0 + l1 * sza^1 + l2 * sza^2 + l3 * sza^3 + l4 * sza^4 + l5 * sza^5) * O3^2 * z^3$$

$$+ (m0 + m1 * sza^1 + m2 * sza^2 + m3 * sza^3 + m4 * sza^4 + m5 * sza^5) * O3^3$$

$$+ (n0 + n1 * sza^1 + n2 * sza^2 + n3 * sza^3 + n4 * sza^4 + n5 * sza^5) * O3^3 * z$$

$$+ (p0 + p1 * sza^1 + p2 * sza^2 + p3 * sza^3 + p4 * sza^4 + p5 * sza^5) * O3^3 * z^2$$

$$+ (q0 + q1 * sza^1 + q2 * sza^2 + q3 * sza^3 + q4 * sza^4 + q5 * sza^5) * O3^3 * z^3) \qquad (4)$$

2. Procédé pour déterminer la densité de flux de rayonnement UV à proximité du sol provoquant un érythème selon la revendication 1 avec un sol sans neige pour un albédo de sol pour UV isotope, indépendant de la longueur d'onde dans la plage spectrale de 290 jusqu'à 400 nm avec une valeur de 0,03, les coefficients du polynôme de y0 jusqu'à y2 étant indiqués ci-dessous et les coefficients du polynôme a jusqu'à q étant indiqués dans un relevé sous forme de tableau en lignes et les coefficients du polynôme a0,b0...q0 jusqu'à a5, b5,...q5 en colonnes: y0 = 0.79459, y1 = -0.0509768, y2 = 0.140257

|   | 0 | 1 | 2 |
|---|---|---|---|
| a | 5.1020418e+02 | 5.6354260e-01 | -2.3091040e-01 |
| b | 1.3951441e+01 | -1.1194501e-01 | 3.1988493e-03 |
| c | -4.9736838e-01 | 4.9108703e-03 | -1.7665002e-04 |
| d | 1.2506738e-02 | -1.2638193e-04 | 4.7448107e-06 |
| e | -5.7957108e+01 | 1.8697043e-02 | 1.9653410e-02 |
| f | -1.6809458e+00 | 1.7892802e-02 | -6.9857920e-04 |
| g | 5.9711761e-02 | -7.1318594e-04 | 2.9968515e-05 |
| h | -1.5088040e-03 | 1.7944364e-05 | -7.6195930e-07 |
| i | 3.7065718e+00 | -4.9669960e-03 | -9.3686582e-04 |
| j | 1.0864932e-01 | -1.2787741e-03 | 5.4793034e-05 |
| k | -3.8758366e-03 | 4.9905607e-05 | -2.2291359e-06 |
| l | 9.8235179e-05 | -1.2583546e-06 | 5.6382820e-08 |
| m | -9.3949447e-02 | 1.8223477e-04 | 1.9002251e-05 |
| n | -2.7640020e-03 | 3.4143271e-05 | -1.5277506e-06 |
| p | 9.8858332e-05 | -1.3109935e-06 | 6.0400422e-08 |
| q | -2.5083741e-06 | 3.2881673e-08 | -1.5141186e-09 |

|   | 3 | 4 | 5 |
|---|---|---|---|
| a | 2.8181759e-04 | 3.8327128e-05 | -2.3897392e-07 |
| b | -2.0872375e-04 | 3.0125029e-06 | -1.2745954e-08 |
| c | 9.2427409e-06 | -1.2980119e-07 | 5.5284446e-10 |
| d | -2.3648445e-07 | 3.2550523e-09 | -1.3671391e-11 |
| e | 1.4143825e-04 | -6.2112118e-06 | 3.4130968e-08 |
| f | 3.3101588e-05 | -4.4775136e-07 | 1.8583037e-09 |
| g | -1.3470159e-06 | 1.8319632e-08 | -7.7609877e-11 |
| h | 3.3543192e-08 | -4.4904497e-10 | 1.8755097e-12 |
| i | -1.6524994e-05 | 4.6530307e-07 | -2.3972347e-09 |
| j | -2.3546769e-06 | 3.0805197e-08 | -1.2562536e-10 |
| k | -9.3982087e-08 | -1.2492823e-09 | 5.2320434e-12 |
| l | -2.3321797e-09 | 3.0509427e-11 | -1.2586983e-13 |
| m | 5.2897951e-07 | -1.2790851e-08 | 6.3891664e-11 |
| n | 6.2890250e-08 | -8.0910603e-10 | 3.2684995e-12 |
| p | -2.4814975e-09 | 3.2634138e-11 | -1.3586470e-13 |
| q | 6.1260233e-11 | -7.9344363e-13 | 3.2536086e-15 |

moyennant quoi, si l'on utilise les coefficients de polynôme 03 mentionnés plus haut, 03 est remplacé dans l'équation (4) de la revendication 1 par : (03-180) / 20.

3. Procédé pour déterminer l'intensité de flux de rayonnement UV déclenchant un érythème à proximité du sol selon la revendication 1 avec un sol recouvert de neige pour un albédo de sol pour UV isotope, indépendant de la longueur d'onde dans la plage spectrale de 290 jusqu'à 400 nm, avec une valeur de 0,85, les coefficients du polynôme de y0 jusqu'à y2 étant indiqués ci-dessous et les coefficients du polynôme a jusqu'à q étant indiqués dans un relevé de tableau en lignes et le coefficients du polynôme a0, b0 ... q0 jusqu'à a5, b5, ... q5 en colonnes: y0 = 0.801062, y1 = -0.0199109, y2 = 0.21295

|   | 0 | 1 | 2 |
|---|---|---|---|
| a | 7.4482837e+03 | 5.4654448e-01 | -3.1517295e-01 |
| b | 1.3980316e+01 | -1.7230379e-01 | 7.6620868e-03 |
| c | -7.9486218e-01 | 8.7952125e-03 | -3.5120114e-04 |
| d | 2.0519671e-02 | -2.1938183e-04 | 8.5986248e-06 |
| e | -8.6435378e+01 | 4.9973262e-02 | 2.7617279e-02 |
| f | -1.8163896e+00 | 2.6145486e-02 | -1.2485826e-03 |
| g | 1.0499966e-01 | -1.2238824e-03 | 5.0835136e-05 |
| h | -2.7097231e-03 | 2.9538523e-05 | -1.1838537e-06 |
| i | 5.5840202e+00 | -8.2260536e-03 | -1.3571859e-03 |
| j | 1.2075276e-01 | -1.8100274e-03 | 8.8928937e-05 |
| k | -7.0853672e-03 | 8.2435257e-05 | -3.4955323e-06 |
| l | 1.8281095e-04 | -1.9437734e-06 | 7.9084037e-08 |
| m | -1.4229575e-01 | 2.8701410e-04 | 2.8110798e-05 |
| n | -3.1172065e-03 | 4.7864190e-05 | -2.3915873e-06 |
| p | 1.8430997e-04 | -2.1347198e-06 | 9.1993333e-08 |
| q | -4.7513116e-06 | 4.9163628e-08 | -2.0270926e-09 |

|   | 3 | 4 | 5 |
|---|---|---|---|
| a | -7.9710675e-05 | 6.0228237e-05 | -3.6160453e-07 |
| b | -3.0858998e-04 | 3.8950397e-06 | -1.5427345e-08 |
| c | 1.6211036e-05 | -2.1875327e-07 | 9.1146350e-10 |
| d | -4.0589149e-07 | 5.4989948e-09 | -2.2914581e-11 |
| e | 2.4504829e-04 | -9.5111446e-06 | 5.1430311e-08 |
| f | 4.6735567e-05 | -5.8080747e-07 | 2.3047928e-09 |
| g | -2.2942330e-06 | 3.1032027e-08 | -1.3042199e-10 |
| h | 5.5838228e-08 | -7.6190621e-10 | 3.2046338e-12 |
| i | -2.5747269e-05 | 7.0360953e-07 | -3.5983927e-09 |
| j | -3.2339098e-06 | 3.9615536e-08 | -1.5572669e-10 |
| k | 1.5646155e-07 | -2.1053642e-09 | 8.8150285e-12 |
| l | -3.7554387e-09 | 5.1149904e-11 | -2.1451019e-13 |
| m | 8.0507080e-07 | -1.9263427e-08 | 9.5823389e-11 |
| n | 8.5552287e-08 | -1.0391554e-09 | 4.0618929e-12 |
| p | -4.1010649e-09 | 5.5004210e-11 | -2.2971660e-13 |
| q | 9.7263510e-11 | -1.3246033e-12 | 5.5457569e-15 |

moyennant quoi, si l'on utilise les coefficients du polynôme mentionnés plus haut, 03 est remplacé dans l'équation (4) de la revendication 1 par : (03-180) / 20.

4. Procédé pour déterminer l'intensité de flux de rayonnement UV déclenchant un érythème à proximité du sol selon la revendication 1 avec un sol partiellement enneigé pour un albédo de sol pour UV isothope, indépendant de la longueur d'onde dans la plage spectrale de 290 jusqu'à 400 nm, avec une valeur de 0,50, les coefficients du polynôme de y0 jusqu'à y2 étant d'abord indiqués ci-dessous et les coefficients du polynôme a jusqu'à q étant indiqués dans un relevé sous forme de tableau en lignes et les coefficients de polynôme a0, b0 ... q0 jusqu'à a5, b5,... q5 en colonnes : y0 = 0.790367, y1 = -0.0372151, y2 = 0.167212

|   | 0 | 1 | 2 |
|---|---|---|---|
| a | 6.1903100e+02 | 1.1289060e+00 | -3.0346700e-01 |
| b | 1.4859400e+01 | -2.2485350e-01 | 9.5901500e-03 |
| c | -6.6006500e-01 | 1.0913850e-02 | -4.7588300e-04 |
| d | 1.6508100e-02 | -2.7477740e-04 | 1.2055000e-05 |
| e | -7.1611300e+01 | 5.2246090e-02 | 2.2735600e-02 |
| f | -1.8773800e+00 | 3.5766600e-02 | -1.6775100e-03 |
| g | 8.4056900e-02 | -1.5878680e-03 | 7.2479200e-05 |
| h | -2.1019000e-03 | 3.8579110e-05 | -1.7620600e-06 |
| i | 4.6215800e+00 | -1.0955810e-02 | -9.0789800e-04 |
| j | 1.2384400e-01 | -2.5768280e-03 | 1.2445400e-04 |
| k | -5.6066500e-03 | 1.1190770e-04 | -5.2377600e-06 |
| l | 1.4020500e-04 | -2.6952480e-06 | 1.2473900e-07 |
| m | -1.1765300e-01 | 3.8528440e-04 | 1.5616400e-05 |
| n | -3.1876600e-03 | 6.9409610e-05 | -3.3984000e-06 |
| p | 1.4531600e-04 | -3.0118970e-06 | 1.4226000e-07 |
| q | -3.6365800e-06 | 7.2002880e-08 | -3.3778600e-09 |

|   | 3 | 4 | 5 |
|---|---|---|---|
| a | 8.5067750e-04 | 4.1902070e-05 | -2.7287750e-07 |
| b | -3.5965440e-04 | 4.5634810e-06 | -1.8611900e-08 |
| c | 1.7508860e-05 | -2.2555470e-07 | 9.3632480e-10 |
| d | -4.4133050e-07 | 5.6206770e-09 | -2.3177900e-11 |
| e | 2.1219250e-04 | -8.1136820e-06 | 4.3859470e-08 |
| f | 5.6698920e-05 | -6.9639650e-07 | 2.8112480e-09 |
| g | -2.5415790e-06 | 3.2225220e-08 | -1.3380940e-10 |
| h | 6.1729220e-08 | -7.9943700e-10 | 3.2214230e-12 |
| i | -2.6345250e-05 | 6.3981860e-07 | -3.2159730e-09 |
| j | -4.0456650e-06 | 4.8821680e-08 | -1.9446130e-10 |
| k | 1.7834830e-07 | -2.2323550e-09 | 9.1855410e-12 |
| l | -4.2737160e-09 | 5.3290710e-11 | -2.1893600e-13 |
| m | 8.4936620e-07 | -1.7935240e-08 | 8.7283070e-11 |
| n | 1.0852820e-07 | -1.2928470e-09 | 5.1212370e-12 |
| p | -4.7703000e-09 | 5.9117160e-11 | -2.4280580e-13 |
| q | 1.1348790e-10 | -1.4090950e-12 | 5.7488740e-15 |

moyennant quoi, si l'on utilise les coefficients du polynôme mentionnés ci-dessus, 03 est remplacé dans l'équation (4) de la revendication 1 par : (03-180) / 20.

5. Procédé selon l'une quelconque des revendications 2 à 4 pour déterminer un indice UV, la densité de flux de rayonnement UV déclenchant un érythème $UV_{érythème}$ étant multipliée en mW/m$^2$ par le facteur 1 / (25mW/m$^2$).

6. Procédé selon l'une quelconque des revendications 2 à 4 pour déterminer la durée des coups de soleil en minutes, la valeur d'inversion du flux de densité de rayonnement UV $UV_{érythème}$ en mW/m$^2$ étant multiplié par le facteur 3500 (mW/m$^2$).

7. Appareil pour l'application du procédé selon la revendication 5, **caractérisé par** des moyens aménagés pour la détermination par le calcul de l'équation (4) dans la revendication 1 pour la fabrication de cartes d'indice UV.

8. Equipement pour l'application du procédé selon la revendication 6, **caractérisé par** des moyens aménagés pour la détermination par le calcul de l'équation (4) dans la revendication 1 pour la fabrication de cartes de durées de coup de soleil.

# Fig.1

## Entwicklungsschema

**1**

Datensatz fuer die UV-Strahlungsgroesse

als Funktion der Einflussgroessen

aus Strahlungstransportrechnungen

**2**

UV = UV (O3, z)

durch

2-dim Polynom 3.Grades

**3**

UV = UV (O3, z, sza)

durch Koeffizientenfit mit

1-dim Polynom 5. Grades

**4**

UV = UV (O3,z,sza,opd)

durch Multiplikation mit

Wolkenreduktionsfaktor

**5**

UV-Bestimungsverfahren

EP 1 120 636 B1

# Anwendungsschema

## Fig.2

UV-Einflussparameter, z.B aus Satellitenmessungen, Bodenmessungen oder mit Hilfe eines Prognosemodells — 6

| Wert der Ozongesamtsaeule O3 in Dobson Units | Wert der Gelaendehoehe z in Metern | Wert des solaren Zenitwinkels sza in Grad | Wert der optischen Dicke der Wolke |

7

8

9

10

UV-Bestimmungsverfahren

11

UV-Strahlungsgroesse — 12

EP 1 120 636 B1